# EUROPÄISCHE PATENTSCHRIFT

(11) **EP 2 311 583 B1**
(45) Veröffentlichungstag und Bekanntmachung des Hinweises auf die Patenterteilung: **12.12.2012**
(21) Anmeldenummer: 10187426.1
(22) Anmeldetag: 13.10.2010
(51) Int. Cl.: B21D 5/02, G01B 3/00, G01B 5/06, B23Q 17/20

(54) **Verfahren zur Bestimmung der Dicke eines Werkstückes mit einer Biegemaschine und eine solche Biegemaschine**
Method for measuring the thickness of a workpiece with a bending machine and such bending machine
Procédé de détermination de l'épaisseur d'une pièce à usiner à l'aide d'une plieuse et une telle plieuse

(30) Priorität: 14.10.2009 AT 16172009
(43) Veröffentlichungstag der Anmeldung: 20.04.2011
(73) Patentinhaber: TRUMPF Maschinen Austria GmbH & Co. KG., 4061 Pasching (AT)
(72) Erfinder: Sallaberger, Michael, 4075 Breitenaich (AT)
(74) Vertreter: Burger, Hannes

(56) Entgegenhaltungen:
- DE-A1- 4 008 149
- JP-A- 5 131 341
- JP-A- 2003 225 710
- JP-A- 2004 042 096
- US-A1- 2003 019 266

## Beschreibung

Die Erfindung betrifft ein Verfahren zur Bestimmung der Dicke eines in einer Biegemaschine zu biegenden flächigen Werkstücks unter Verwendung einer Anschlagvorrichtung der Biegemaschine und betrifft eine Biegemaschine insbesondere Abkantpresse, für das Gesenkbiegen von aus Blech zu fertigenden Werkstücken, mit einer Anschlagvorrichtung und einer Steuerungsvorrichtung zur Steuerung des Biegevorganges.

Ein derartiges Verfahren bzw. eine gattungsgemäße Fertigungseinrichtung ist aus dem Patent Abstract of Japan JP 2004-042096 A bekannt, wonach mittels einer Anschlagvorrichtung zur Positionierung des Werkstücks eine Vermessung der Oberkante des Biegegesenks und der Unterkante des Biegestempels erfolgt, um den tatsächlichen Abstand zwischen Biegestempel und Biegegesenk zu messen und nicht über den Pressenbalkenabstand und die Werkzeughöhen zu errechnen. Aufgrund der genau gemessenen Werkzeugposition kann unter anderem die exakte Position des Biegestempels bei Werkstückkontakt und damit auch die exakte Werkstückdicke ermittelt werden. Zur Durchführung der Messungen ist an der Anschlagvorrichtung eine verschwenkbar angeordnete Messspitze vorgesehen.

Aus Patent Abstract of Japan JP 2003-225710 A ist eine Messung der Blechdicke eines Werkstückes mit einer in der Fertigungseinrichtung angeordneten rückziehbaren Zange bekannt.

Der vorliegenden Erfindung liegt die Aufgabe zugrunde, ein gattungsgemäßes Verfahren und eine Biegemaschine, das bzw. die zur Bestimmung der Dicke eines zu biegenden Werkstückes geeignet ist, derart zu verbessern, dass bei ausreichend hoher Messauflösung und Messreproduzierbarkeit einerseits ein geringerer Zeitbedarf für die durchzuführenden Messungen und andererseits ein geringerer konstruktiver Messaufwand bei gleichzeitiger mechanischer Robustheit der Messanordnung zur Verfügung gestellt werden kann.

Diese Aufgabe wird durch das im Anspruch 1 angegebene Verfahren und die im Anspruch 11 angegebene Biegemaschine gelöst.

Das erfindungsgemäße Verfahren zur mittelbaren Bestimmung der Dicke eines in einer Fertigungseinrichtung zu bearbeitenden Werkstückes zeichnet sich dadurch aus, dass mit der Anschlagvorrichtung in einer ersten Konturmessung eine Anlagefläche oder eine Anlageflächenkontur eines Biegegesenks vermessen und als durch zumindest zwei Raumpunkte umfassende Referenzkurve erfasst wird und in einer zweiten Konturmessung eine Oberfläche oder eine Oberflächenkontur des zu biegenden und an der Anlagefläche anliegenden Werkstücks vermessen und als zumindest zwei Raumpunkte umfassende Messkurve erfasst wird und die Dicke durch Vergleich von Messkurve und Referenzkurve als zumindest ein Dickenmesswert des Werkstücks ermittelt wird, wobei das Tastelement bei den zwei Konturmessungen parallel zur Biegeebene etwa horizontal entlang der Anlagefläche und der Oberfläche gleitend oder wälzend oder berührungslos geführt wird.

Eine erfindungsgemäße Biegemaschine, die zur Durchführung des erfindungsgemäßen Verfahrens geeignet ist, ist dadurch gekennzeichnet, dass das Tastelement mittels des Positionierantriebes gleitend oder wälzend oder berührungslos entlang einer Anlagefläche des Biegegesenks zur Ermittlung einer Referenzkurve und entlang einer Oberfläche eines auf der Anlagefläche anliegenden, zu biegenden Werkstücks zur Ermittlung einer Messkurve parallel zur Biegeebene verstellbar ist, wobei die Positioniersteuerung während der Bewegung des Tastelements mittels diesem erfasste Raumpunkte, die eine Anlageflächenkontur des Biegegesenks und Raumpunkte die eine Oberflächenkontur des Werkstücks repräsentieren, an die Steuerungsvorrichtung übertragen kann und diese aus den ermittelten Koordinatenwerten zumindest einen die Dicke des Werkstücks repräsentierenden Dickenmesswert berechnet.

Dabei werden die Koordinaten der Raumpunkte der Referenzkurve und die Koordinaten der Raumpunkte der Messkurve mittels der Positionserfassung des Positionierantriebes und der Positionssteuerung der Anschlagvorrichtung in Bezug auf deren Koordinatensystem oder auch ein anderes geeignetes Koordinatensystem ermittelt, wobei durch die Anwendung von Koordinatentransformation natürlich zwischen verschiedenen Koordinatensystemen umgerechnet werden kann.

Gegenüber dem Stand der Technik besitzt das erfindungsgemäße Verfahren bzw. die erfindungsgemäße Biegemaschine den Vorteil, dass nicht, wie es bei der bekannten Dickenmessung mittels einer zangenartigen Vorrichtung der Fall ist, eine zusätzliche Maßverkörperung an der Zangenmessvorrichtung erforderlich ist. Weiters kann mit der zangenartigen Messvorrichtung keine eigene Vermessung des Biegegesenks erfolgen, wohingegen mit dem erfindungsgemäßen Verfahren auch unzulässige Abweichungen der Biegegesenkgeometrie erkannt werden können. Gegenüber dem weiteren Stand der Technik gemäß JP 2004-042096 A besitzt die Erfindung den Vorteil, dass die Ermittlung der Werkstückdicke in lediglich zwei Messvorgängen erfolgen kann und nicht durch eine Vermessung des Biegegesenks, des Biegestempels und einer nachfolgenden Erfassung des bis zum Berührpunkt, bei dem der Kontakt zwischen Biegestempel und Werkstück erfolgt, zurückgelegten Wegs des verstellbaren Pressenbalkens. Da die exakte Vermessung des Berührpunktes, insbesondere bei ungleichmäßigen Blechdicken schwierig ist, ergibt eine erfindungsgemäße Dickenmessung genauere Aussagen über die Blechdicke des zu biegenden Werkstückes.

Das Ergebnis der Dickenmessung kann beispielsweise dazu verwendet werden, Werkstücke, deren Dicke außerhalb eines zulässigen Bereiches liegt, bereits vor der Durchführung eines Biegevorgangs auszuscheiden, wodurch die Fertigung fehlerhafter Teile bereits frühzeitig vermieden werden kann. Zur Durchführung des erfindungsgemäßen Verfahrens ist es vorteilhaft, wenn die Anschlagvorrichtung eine Positionierachse parallel zur Biegeebene und parallel zur Anlagefläche des Biegegesenks bzw. der Oberfläche des Werkstücks besitzt, mit der das Tastelement entlang der zu messenden Kontur geführt wird und weiters eine vertikale, rechtwinkelig auf die Anlagefläche stehende Positionierachse, mit der auch eine Positionserfassung für das Tastelement durchgeführt werden kann. Ein Vorteil des erfindungsgemäßen Verfahrens besteht auch darin, dass die Dicke eines Werkstückes aus dem Vergleich durch Subtraktion der Messkurve und der Referenzkurve ermittelt wird, wobei beide Kurven jeweils zumindest zwei vermessene Raumpunkte umfassen. Während bei der Messung in lediglich einem Punkt nur ein möglicher Dickenmesswert zur Verfügung steht, erlaubt das erfindungsgemäße Verfahren mit jeweils zumindest zwei vermessenen Raumpunkten mehrere Interpretationsmöglichkeiten für die Werkstückdicke. So kann beispielsweise als Werkstückdicke, die zur Festlegung der Stempeleintauchtiefe herangezogen wird, beispielsweise der maximale Dickenmesswert, der minimale Dickenmesswert, oder aber auch ein rechnerischer Mittelwert aus den mehreren Dickenmesswerten, etwa ein arithmetisches Mittel, geometrisches Mittel, harmonisches Mittel, quadratisches Mittel usw. herangezogen werden.

Eine vorteilhafte Ausführungsvariante des Verfahrens kann insbesondere darin bestehen, dass durch Subtraktion von Messkurve und Referenzkurve ein mehrere Dickenmesswerte, vorzugsweise eine Vielzahl von Dickenmesswerten enthaltender Dickenverlauf des Werkstücks ermittelt wird, wodurch noch mehr Informationen über die tatsächliche Werkstückdicke zur Verfügung stehen. Als repräsentative Dicke kann dabei beispielsweise die Differenz der in Dickenrichtung orientierten Koordinaten zweier, vermessener Raumpunkte herangezogen werden, es ist jedoch auch möglich, bei jeweils mehreren vermessenen Raumpunkten der Anlagefläche bzw. der Werkstückoberfläche die Abschnitte zwischen vermessenen Raumpunkten durch lineare oder polynomische Kurvenabschnitte zu verbinden und eine maßgebliche Dicke aus dem Vergleich der auf diese Weise quasi virtuellen Messkurve mit der Referenzkurve zu ermitteln. Diese durch Interpolation von tatsächlich vermessenen Raumpunkten ermittelte Messkurve und Referenzkurve stellt dadurch eine gute Annäherung an den tatsächlichen Dickenverlauf des Werkstücks dar.

Besonders vorteilhaft kann das Verfahren dahingehend ergänzt werden, dass die aus dem oder den Dickenmesswerten des Werkstücks oder dem Dickenverlauf des Werkstücks abgeleitete repräsentative Dicke zur Ermittlung der zur Erreichung eines Sollwinkels am gebogenen Werkstück erforderlichen Eintauchtiefe des Biegestempels oder zur Ermittlung der zur Erreichung eines Sollwinkels am gebogenen Werkstück erforderlichen Biegekraft benutzt wird. Da in vielen Fällen die tatsächliche Werkstückdicke von einer vom Lieferanten bekannt gegebenen Nenndicke innerhalb fertigungstechnisch notwendiger Toleranzen abweicht, kann durch die Verwendung der am Werkstück ermittelten Dicke bei der Berechnung der erforderlichen Eintauchtiefe bzw. der erforderlichen Biegekraft eine wesentlich höhere Biegegenauigkeit erzielt werden. Die Steuerungsvorrichtung ist dazu so ausgeführt, dass damit zusätzlich oder alternativ zu eingegebenen Nennwerten der Blechdicke auch der ermittelte zumindest eine Dickenmesswert oder der Dickenverlauf verarbeiten werden können.

Eine vorteilhafte Weiterbildung des Verfahrens besteht darin, dass die zwei Konturmessungen im Falle eines an der Anlagefläche und der Oberfläche gleitend oder wälzend entlang geführten Tastelement mit einer möglichst konstanten Abtastkraft durchgeführt werden und im Falle eines an der Anlagefläche und der Oberfläche berührungslos entlang geführten Tastelements mit einem möglichst konstanten Abtastabstand abgefahren werden. Zur Konstanthaltung der Abtastkraft bzw. des Abtastabstandes ist eine zwischen Positioniersteuerung und Positionierantrieb für das Anschlagelement wirksame Regelungsfunktion realisiert, die auf verschiedene Weise in den CNC-Programmabläufen integriert sein kann. Das Tastelement wird in diesem Fall quasi gefühlvoll entlang der zu vermessenden Oberfläche nachgeführt und es können dadurch elastische Verformungen am zu vermessenden Biegegesenk bzw. Werkstück sowie der Anschlagvorrichtung mit dem Tastelement reduziert werden und dadurch die Messgenauigkeit wesentlich erhöht werden. Durch den konstanten Abstand eines berührungslosen Tastelementes kann dieser Abstand immer in dem Bereich der höchsten Messgenauigkeit des Tastelements gehalten werden, wodurch ebenfalls die Genauigkeit bei der Vermessung der Raumpunkte an der Anlagefläche bzw. der Werkstückoberseite erhöht wird. Die Anschlagvorrichtung der Biegemaschine umfasst dazu Mittel zur mittelbaren oder unmittelbaren Erfassung der Abtastkraft des Tastelements oder des Abtastabstandes des Tastelements, die ihren Messwert der Positioniersteuerung bzw. dem Positionierantrieb der Anschlagvorrichtung zuführen. Die Einwirkung der Abtastkraft kann auch dazu dienen, geringfügige Flächenverformungen des Werkstücks, etwa eine leichte Krümmung, die durch beispielsweise durch das Eigengewicht beim Auflegen auf das Biegegesenk auftritt und das Messergebnis verfälschen könnte, zu eliminieren, indem das Werkstück durch die Abtastkraft so belastet wird, bis es unterhalb des Tastelements flächig am Biegegesenk anliegt.

Eine Möglichkeit, die Abtastkraft mittelbar zu erfassen und danach auch zu regeln, besteht darin, beim Positionierantrieb für die vertikale Bewegung des Anschlagelements, also in Dickenrichtung, die Motorstromaufnahme zu erfassen und auf konstantes Niveau zu regeln, wodurch auch die Abtastkraft in vertikaler Richtung zwischen Tastelement und zu messender Anlagefläche bzw. Oberfläche des Werkstücks weitgehend konstant gehalten werden kann. Die Motorstromaufnahme kann beispielsweise anhand der häufig bei CNC-gesteuerten Achsen eingesetzten Frequenzrichtersysteme auf einfache Weise ohne zusätzlichen, baulichen Aufwand gemessen werden.

Alternativ kann die Messung der Abtastkraft auch mittels einer mit dem Tastelement verbundenen Kraftmesseinrichtung erfolgen, beispielsweise einem Piezo-Kraftaufnehmer. Die Regelung der konstanten Abtastkraft bzw. des konstanten Abtastabstandes kann auch in diesem Fall vorteilhafterweise von der Positioniersteuerung der Anschlagvorrichtung durchgeführt werden.

Da die Positionierbewegungen der Anschlagvorrichtung zur Positionierung des Anschlagelements als auch zur Vermessung des Biegegesenks bzw. des Werkstücks mit dem Tastelement programmgesteuert ablaufen, ist es dabei von Vorteil, wenn der Steuerungsvorrichtung vor der Konturmessung der Anlageflächenkontur des Biegegesenks vorzugsweise mittels einer automatischen Werkzeugerkennung Werkzeugdaten des Biegegesenks zugeführt werden. Die Werkzeugdaten umfassen insbesondere Geometriedaten des Biegegesenks, wodurch mögliche Fehleingaben bei manueller Eingabe der Werkzeuggeometrie mit daraus resultierender Gefahr einer Kollision zwischen Anschlagvorrichtung bzw. Tastelement und Biegegesenk vermieden werden können.

Eine Ausführungsvariante des erfindungsgemäßen Verfahrens, die eine wesentliche Erhöhung der Messgenauigkeit bewirkt, besteht darin, dass die erste Konturmessung am Biegegesenk und die zweite Konturmessung am Werkstück mit zumindest abschnittsweise identischen Bewegungsabläufen des Tastelements durchgeführt werden. Identische Bewegungsabläufe werden in diesem Zusammenhang durch identische Bewegungsrichtung und identische Bewegungsgeschwindigkeit des Tastelements bei beiden Konturmessungen bewirkt, wodurch die Bewegungsachsen der Anschlagvorrichtung bei beiden Messungen gleichartigen Belastungen ausgesetzt wird, und dadurch bei beiden Messvorgängen auch gleichartige Verformungen der Anschlagvorrichtung hervorgerufen werden. Da die Dickenwerte bzw. der Dickenverlauf des Werkstücks durch Vergleich, insbesondere Subtraktion von Messkurve und Referenzkurve ermittelt werden, können Messungenauigkeiten, die durch elastische Verformungen der Anschlagvorrichtung während der Messabläufe verursacht werden, weitestgehend kompensiert werden, da bei der zweiten Konturmessung der Werkstückoberfläche derselbe, systematische Fehler auftritt wie bei der ersten Konturmessung der Anlagefläche des Biegegesenks.

Vorteilhafterweise kann die Anschlagvorrichtung auch dazu verwendet werden, das Werkstück für die Durchführung der Konturmessung auf dem Biegegesenk zu positionieren. Dadurch kann beispielsweise die Konturmessung der Werkstückoberfläche an vorgewählten Positionen erfolgen. So ist es zum Beispiel möglich, die Vermessung der Oberfläche und damit auch der Dicke des zu biegenden Werkstückes im Bereich der späteren Biegelinie durchzuführen, wodurch die Dickeninformation genau für den umzuformenden Werkstückbereich zur Verfügung steht. Alternativ dazu ist es auch möglich, jeweils einen konstanten Abstand zum hinteren Rand des Werkstücks einzuhalten. Falls das Werkstück während des Messvorganges von einem Benutzer händisch gehalten wird, ist es von Vorteil, wenn das Werkstück nach dem Dickenmessvorgang, unmittelbar vor dem Biegevorgang noch einmal mittels der Anschlagvorrichtung auf dem Biegegesenk positioniert wird, damit eventuell vorkommende Verschiebungen des Werkstücks gegenüber dem Biegegesenk durch den Messvorgang bzw. den Benutzer korrigiert werden können.

Wie bereits zuvor erwähnt, kann die repräsentative Dicke bzw. der maßgebliche Dickenwert des Werkstücks durch einen Mittelwert oder einen Maximalwert oder einen Minimalwert aus mehreren bei den wenigstens zwei Konturmessungen Dickenmesswerten ausgewählt oder errechnet werden, wodurch der für eine hohe Biegegenauigkeit am besten geeignete Dickenwert zur Verfügung steht.

Das erfindungsgemäße Verfahren kann noch dahingehend ergänzt werden, dass vor der Konturmessung des Biegegesenks eine Detektion des Biegegesenks und eine Vermessung der Biegeausnehmung durch Verfahren des Tastelements in einer zur Biegeebene rechtwinkeligen Richtung durchgeführt wird. Dazu kann das Tastelement von der Rückseite her an das Biegegesenk angenähert werden und der Kontakt mit dem Biegegesenk über den ansteigenden Widerstand bzw. die damit einhergehende erhöhte Stromaufnahme für den Positionierantrieb festgestellt werden. Durch eine derartige Vermessung der Biegeausnehmung, kann auch überprüft werden, ob die in der Steuerungsvorrichtung hinterlegte Werkzeugtype mit dem tatsächlich eingesetzten Biegegesenk übereinstimmt. Die Vermessung der Biegeausnehmung, etwa in Form einer V-Nut, kann insbesondere auch zur sicherheitstechnischen Abschätzung der von Pressbalkengeschwindigkeit, Gesenkweite und Gesenkradius abhängigen Verformungsgeschwindigkeit von Interesse sein.

Das Tastelement einer erfindungsgemäßen Biegemaschine ist vorzugsweise durch eine Kugel, eine Halbkugel, eine Rolle, ein Rad oder einen optischen, optoelektronischen oder schallelektronischen Sensor gebildet. Insbesondere durch eine wälzende Tastbewegung des Tastelements können seitliche Kräfte auf das Werkstück niedrig gehalten werden und kann dadurch unerwünschten Verschiebungen des Werkstücks während des Messvorgangs entgegengewirkt werden. Die Oberfläche des Tastelements ist zur Vermeidung von Abnutzung und daraus resultierenden Messfehlern mit einem möglichst verschleißbeständigen Material versehen.

Die in Biegemaschinen eingesetzten Anschlagvorrichtungen sind zumeist an der dem Benutzer abgewendeten Rückseite, hinter der Biegeebene, angeordnet und weisen als Anschlagelement häufig sogenannte Hinteranschlagfinger auf, die mittels eines Positionierantriebs in entsprechende Position relativ zum Biegegesenk verstellt werden. Gemäß einer vorteilhaften Ausführung einer erfindungsgemäßen Biegemaschine ist das Tastelement durch einen an der Unterseite eines derartigen Hinteranschlagfingers befestigten Wälzkörper, insbesondere eine Rollkugel oder eine Abtastrolle gebildet.

Zum Ausgleich einer eventuell auftretenden Durchbiegung des verstellbaren Pressenbalkens bei hohen Biegekräften, kann der feststehende Pressenbalken eine Einrichtung zur aktiven Verstellung seiner Krümmung innerhalb der Biegeebene umfassen. Durch eine derartige aktiv herstellbare Bombierung des feststehenden Pressenbalkens kann auch bei Werkstücken mit langen Biegelinien ein konstanter Biegewinkel erzielt werden.

Zum besseren Verständnis der Erfindung wird diese anhand der nachfolgenden Figuren näher erläutert.

Es zeigen jeweils in stark schematisch vereinfachter Darstellung:
- Fig. 1: eine Ansicht einer erfindungsgemäßen Biegepresse mit einem Tastelement an der Anschlagvorrichtung;
- Fig. 2: den schematischen Ablauf der Vermessung des Biegegesenks;
- Fig. 3: den schematischen Ablauf der Vermessung eines Werkstückes;
- Fig. 4: ein Beispiel von mit dem erfindungsgemäßen Verfahren ermittelten Dickenmess- werten und eines Dickenverlaufs eines Werkstückes;
- Fig. 5: eine Seitenansicht der Vermessung eines Werkstücks mit einem berührungslosen Tastelement.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

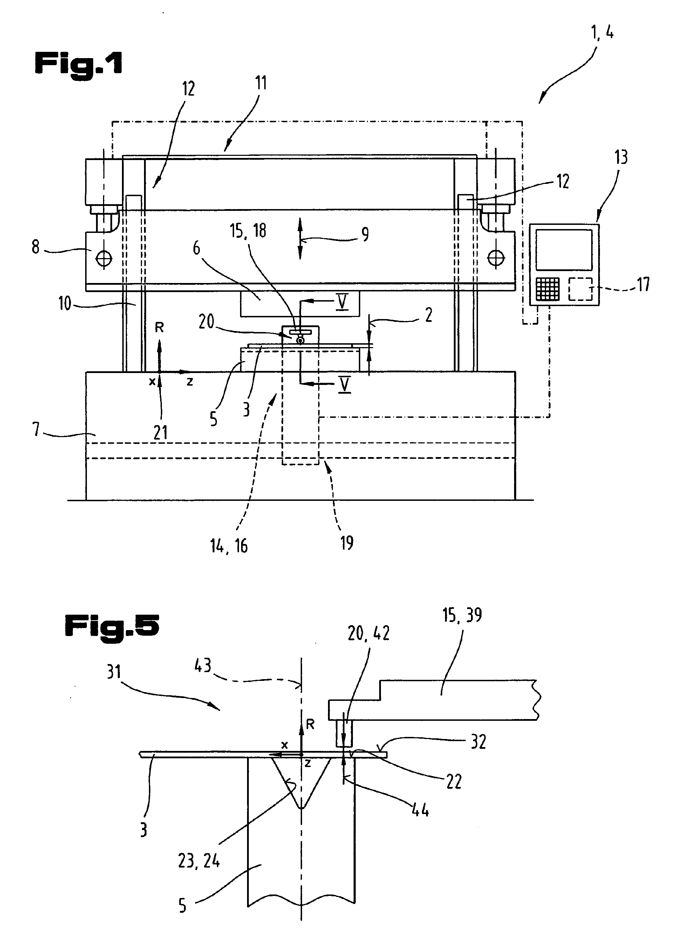

Fig. 1 zeigt eine Biegemaschine 1 zur Durchführung des erfindungsgemäßen Biegeverfahrens zur Bestimmung der Dicke 2 eines mit der Biegemaschine 1 zu biegenden Werkstücks 3. Die Biegemaschine 1 ist im dargestellten Ausführungsbeispiel als Abkantpresse 4 ausgebildet, bei der das Werkstück 3 zwischen einem Biegegesenk 5 mit einer Biegeausnehmung und einem Biegestempel 6 umgeformt wird. Beim so genannten Abkanten erfährt dabei das Werkstück 3 eine Biegung um eine gerade Kante und soll nach Ende der Umformung im entlasteten Zustand einen bestimmten Sollwinkel zwischen den gebogenen Schenkeln aufweisen. Die Genauigkeit des erzielten Biegewinkels hängt dabei in hohem Maße von der Dicke 2 des Werkstücks 3 ab, weshalb es von Vorteil ist, vor Durchführung eines Biegevorgangs etwaige Abweichungen der Dicke 2 eines Werkstücks 3 von der angegebenen Nenndicke feststellen zu können.

Das Biegegesenk 5 ist, wie dargestellt, in den meisten Fällen an einem unteren, feststehenden Pressenbalken 7 oder einem Pressentisch angeordnet, während der Biegestempel 6 in den meisten Fällen an einem oberen, verstellbaren Pressenbalken 8 angeordnet ist. Der verstellbare obere Pressenbalken 8 ist in Verstellrichtung 9 mittels einer nicht dargestellten Führungsanordnung an einem feststehenden und mit dem unteren Pressenbalken 7 verbundenen Maschinenrahmen 10 verstellbar gelagert. Die zur Bewegung des Pressenbalkens 8 erforderlichen Kräfte werden durch einen Stellantrieb 11, beispielsweise in Form zweier Hydraulikzylinder 12 aufgebracht.

Die Funktionsabläufe der Biegemaschine 1, insbesondere die Steuerung des Stellantriebes 11 für die Bewegung des verstellbaren Pressenbalkens 8, werden mit einer Steuerungsvorrichtung 13 ausgeführt, die über speicherprogrammierbare Recheneinheiten und Schnittstellen zur Ansteuerung der Maschinenkomponenten sowie zur Datenein- und -ausgabe aufweist.

Um das exakte Positionieren eines Werkstücks 3 im Bezug auf das Biegegesenk 5 zu erleichtern und dadurch die Erzielung der gewünschten Teilegeometrie sicherzustellen, umfasst die Biegemaschine 1 weiters eine Anschlagvorrichtung 14, die in strichlierten Linien an der Rückseite hinter dem feststehenden Pressenbalken 7 angeordnet ist. Die Anschlagvorrichtung 14 umfasst ein Anschlagelement 15, das mittels eines Positionierantriebes 16 und einer Positioniersteuerung 17 in vorbestimmte Positionen bezüglich des Biegegesenks 5 verstellbar ist und dadurch ein hinterer Rand eines Werkstücks 3 in exakten Abstand zur vertikalen Biegeebene, die durch das Biegegesenk 5 und den Biegestempel 6 verläuft, gebracht werden kann. Die Positioniersteuerung 17 ist in Fig. 1 als Bestandteil der Steuerungsvorrichtung 13 dargestellt, kann jedoch auch von dieser baulich getrennt und mit dieser über entsprechende Schnittstellen verbunden sein. Das Anschlagelement 15 kann aufgrund seiner länglichen Form rechtwinkelig zur Biegeebene auch als Hinteranschlagfinger 18 bezeichnet werden und ist über geeignete Führungsanordnungen 19 des Positionierantriebes 16 in drei zueinander rechtwinkeligen Richtungen verstellbar. Die Führungsanordnung 19 ist etwa durch drei CNCgesteuerte Positionierachsen mit Linearführungen und Linearantrieben gebildet, wobei an dieser Stelle auf die aus dem Stand der Technik bekannten Verstellanordnungen für eine derartige Anschlagvorrichtung verwiesen wird.

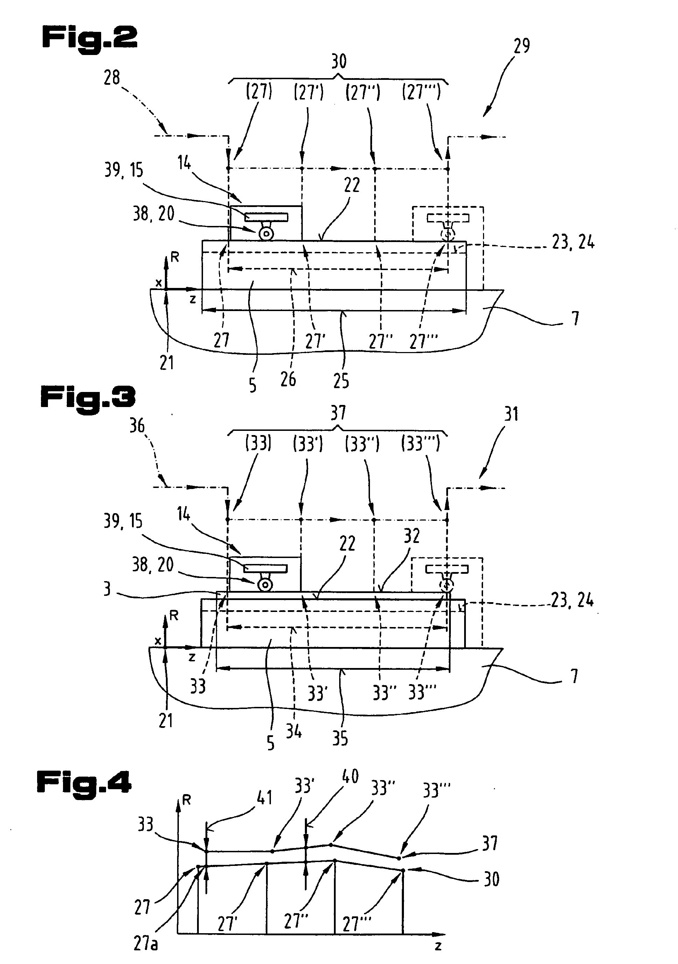

Zur Bestimmung der Dicke 2 eines Werkstückes 3 weist das Anschlagelement 15 ein Tastelement 20 auf, mit dem einerseits die dem Biegestempel 6 zugewandte Oberseite des Biegegesenks 5 als auch die dem Biegestempel 6 zugewandte Oberseite eines auf dem Biegegesenk 5 anliegenden Werkstücks 3 vermessen werden kann. Ergebnis dieser Messungen sind dabei Koordinaten von Raumpunkten, die im Bezug auf ein Koordinatensystem 21 erfasst werden. Das Prinzip und der Ablauf dieser Messungen sind im Folgenden in den Fig. 2 bis 5 dargestellt.

Fig. 2 zeigt schematisch die Vermessung des Biegegesenks 5 mittels des am Anschlagelement 15 angeordneten Tastelements 20 unter Verwendung der Anschlagvorrichtung 14. Die Oberseite des Biegegesenks 5 weist eine im Allgemeinen ebene Anlagefläche 22 auf, auf der ein zu biegendes Werkstück 3 vor dem Biegevorgang aufgelegt wird und mittels des nicht dargestellten Biegestempels 6 in eine Biegeausnehmung 23, hier in Form einer V-Nut 24, eingedrückt wird, und dadurch die bleibende Verformung des Werkstücks 3 bewirkt.

Die Vermessung des Biegegesenks 5 erfolgt, indem das Tastelement 20 von oben her an die Anlagefläche 22 angenähert wird und anschließend in einer kontinuierlichen Bewegung in Richtung der Biegegesenklänge 25 an der Anlagefläche 22 vom Positionierantrieb 16 entlanggeführt wird. Die Messlänge 26 erstreckt sich dabei über einen möglichst großen Anteil der Biegegesenklänge 25. In der Messlänge 26 werden an zumindest zwei Raumpunkten 27 der Anlagefläche 22 deren Koordinaten im Bezug auf das Koordinatensystem 21 erfasst. Dies kann beispielsweise über ein im Positionierantrieb 16 integriertes Wegmesssystem erfolgen, das bei CNC-gesteuerten Positionierachsen Stand der Technik ist. Im dargestellten Ausführungsbeispiel werden entlang der Messlänge 26 vier Raumpunkte 27, 27', 27", 27"' erfasst und zumindest deren in Dickenrichtung orientierte R-Koordinaten im Koordinatensystem 21, vorzugsweise jedoch auch deren Z-Koordinaten erfasst. Wie Fig. 2 zu entnehmen ist, sind für die vertikale Position der vermessenen Raumpunkte 27 die R-Koordinaten von Bedeutung, da diese für die spätere Ermittlung der Dicke 2 des Werkstücks 3 in erster Linie maßgeblich sind. Der Bewegungsablauf des Tastelements 2 während der Vermessung der Anlagefläche 22 ist durch eine in strichlierten Linien angedeutete Bewegungsbahn 28 dargestellt, wobei die Bewegungsbahn 28 sowie die Raumpunkte 27 der Übersichtlichkeit halber oberhalb des Biegegesenks zusätzlich dargestellt sind, obwohl sie sich natürlich im Bereich der Anlagefläche 22 befinden.

In Fig. 2 ist somit vereinfacht eine erste Konturmessung 29 dargestellt, mit der eine durch die Raumpunkte 27, 27', ... definierte und die Anlagefläche 22 repräsentierende Referenzkurve 30 erfasst wird.

In Fig. 3 ist die Vermessung des Werkstücks 3, das auf der Anlagefläche 22 des Biegegesenks 5 anliegt, schematisch dargestellt. Dazu wird, wie bei der ersten Konturmessung 29, in einer zweiten Konturmessung 31 das am Anschlagelement 15 angeordnete Tastelement 20 an der dem Biegestempel 6 zugewandten Oberfläche 32 des Werkstücks 3 entlang geführt und werden dabei Raumpunkte 33 an dieser Oberfläche vermessen bzw. erfasst. Im dargestellten Ausführungsbeispiel werden entlang einer Messlänge 34, die kleiner oder gleich der Werkstücklänge 35 ist, vier Raumpunkte 33, 33', 33" und 33"' vermessen, indem deren Koordinaten mittels des Positionierantriebs 16 und dessen CNC-gesteuerten Positionierachsen erfasst werden. Bei der zweiten Konturmessung 31 wird das Tastelement 20 entlang der mit gestrichelten Linien dargestellten Bewegungsbahn 36 geführt und bilden die erfassten Raumpunkte 33, 33', 33" und 33'" zusammen eine Messkurve 37, die die Oberfläche 32 des zu biegenden Werkstücks bzw. eine Kontur darauf repräsentiert. Wie der Vergleich der Fig. 2 und 3 zeigt, ist die Bewegungsbahn 36 bei der zweiten Konturmessung 31 ähnlich der Bewegungsbahn 28 bei der ersten Konturmessung 29 zur Vermessung der Anlagefläche 22 des Biegegesenks 5, wobei bei den beiden Messungen annähernd gleiche Kräfte in der Anschlagvorrichtung während der Messvorgänge auftreten und daher eventuell auftretende Verformungen in der Messkette bei beiden Konturmessungen 29, 31 zumindest annähernd gleich sind und durch den nachfolgenden Vergleich von Messkurve 37 und Referenzkurve 30 kompensiert werden.

Bei der Anwendung des erfindungsgemäßen Verfahrens ist es möglich, dass die erste Konturmessung 29 zur Erfassung der Anlagefläche 22 des Biegegesenks 5 nicht bei jedem zu biegenden Werkstück 3 eigens durchgeführt wird, wenn davon ausgegangen werden kann, dass das Biegegesenk 5 sich zwischen den einzelnen Biegevorgängen nicht messbar verändert. Beim Biegen einer Serie von Werkstücken 3 ist somit eine erste Konturmessung 29 vor Beginn einer zusammenhängenden Reihe von Biegevorgängen mit demselben Biegegesenk 5 ausreichend, während zur Erzielung einer hohen Biegegenauigkeit die zweite Konturmessung 31 zur Erfassung der jeweiligen Dicke 2 der Werkstücke 3 bei jedem Werkstück oder zumindest bei einer ausreichenden Stichprobenanzahl bezogen auf die produzierende Anzahl vorgenommen wird.

Für den Fall, dass ein bombiertes Biegegesenk 5 zur Verwendung kommt, das eine konvex gekrümmte Anlagefläche 22 aufweist, ist bei der Durchführung der zweiten Konturmessung 31 am Werkstück 3 erforderlich, dass dieses zuverlässig an die Anlagefläche 22 angedrückt wird.

Das Ausführungsbeispiel gemäß den Fig. 2 und 3 zeigt ein Abtastelement in Form einer Abtastrolle 38, die am Anschlagelement 15 in Form eines Hinteranschlagfingers 39 angeordnet ist. Alternativ dazu kann als Tastelement 20 eine Rollkugel, die ebenfalls einen Wälzkörper darstellt, eingesetzt werden oder aber auch ein Rad oder eine Halbkugel; als berührungslose Tastelemente 20 kommen optische, optoelektronische oder schallelektronische Sensorelemente zum Einsatz.

In Fig. 4 ist schematisch die Auswertung der Dicke 2 des Werkstücks 3 dargestellt, die von der Steuerungsvorrichtung 13 der Biegemaschine 1 durchgeführt wird, jedoch auch bereits von der Positioniersteuerung 17 durchgeführt werden kann. Hierbei werden die Messkurve 37, die Raumpunkte 33, 33', ... an der Oberfläche 32 des Werkstücks 3 umfasst, mit der Referenzkurve 30, die Raumpunkte 27, 27', ... der Anlagefläche 22 des Biegegesenks 5 umfasst, verglichen. Die Gegenüberstellung von Messkurve 37 und Referenzkurve 30 zeigt die Abstände zwischen den Kurven in Richtung der R-Koordinate, die maßgeblich für die Dicke 2 des Werkstücks 3 sind. Der Abstand zwischen den beiden Kurven, also die Differenz der R-Koordinatenwerte, ergibt einen von der Z-Koordinate abhängigen Dickenverlauf 40, der quasi ein Abbild des Werkstückquerschnitts in der Biegeebene darstellt. Wie in Fig. 4 dargestellt, können die einzelnen Raumpunkte 27, 27', ... der Anlagefläche 22 bzw. die Raumpunkte 33, 33', ... der Oberfläche 32 durch Interpolationstechniken zu kontinuierlichen Kurvenzügen verbunden werden, wodurch auch ein kontinuierlicher Dickenverlauf 40 ermittelt werden kann. Im einfachsten Fall erfolgt die Ermittlung von Dickenmesswerten dadurch, dass Raumpunkte 33 an der Oberfläche 32 des Werkstücks 3 an denselben Z-Positionen vermessen werden wie die vermessenen Raumpunkte 27 der darunter liegenden Anlagefläche 22 und dass von den entsprechenden Punktepaaren die Differenz der vertikalen R-Koordinate berechnet wird. In Fig. 4 ist ein derartiger Dickenmesswert 41 als vertikaler Abstand zwischen einem Raumpunkt 27a der Anlagefläche 22 und einem Raumpunkt 33 der Oberfläche 32 des Werkstücks 3 dargestellt. Selbstverständlich können Dickenmesswerte 41 auch aus dem Dickenverlauf 40 ermittelt werden, etwa durch statistische Methoden, wie Mittelwertbildung oder Interpolation, wobei für die Entscheidung, ob ein Werkstück 3 innerhalb der Dickentoleranz liegt oder für die Ermittlung einer erforderlichen Eintauchtiefe anhand der Dicke 2 ein technologisch maßgeblicher Dickenmesswert 41 herangezogen wird.

Fig. 5 zeigt eine Schnittdarstellung durch eine erfindungsgemäße Biegemaschine 1 im Bereich des unteren Biegegesenks 5 in ausschnittsweiser Darstellung während der Durchführung einer zweiten Konturmessung 31 zur Vermessung der Oberfläche 32 eines Werkstücks 3. Das zu biegende Werkstück 3 liegt dabei auf der Anlagefläche 22 des Biegegesenks 5 auf und wird an seiner Oberseite mittels eines Tastelements 20, hier in Form eines berührungslosen Sensors, etwa eines optoelektronischen Sensors 42, der am Anschlagelement 15 in Form eines Hinteranschlagfingers 39 angeordnet ist, vermessen. Die Messung erfolgt dabei, indem das Tastelement 20 bzw. der optoelektronische Sensor 42 mittels der nicht dargestellten Anschlagvorrichtung 14 horizontal und parallel zur Biegeebene 43 an der Oberfläche 32 des Werkstücks 3 entlang bewegt wird. Bei dieser berührungslosen Vermessung der Oberfläche 32 kann zusätzlich ein Abtastabstand 44 zwischen der Oberfläche 32 und dem berührungslosen Sensor 20, 42 auf einen konstanten Wert geregelt werden, wodurch dieser im Bereich der optimalen Messgenauigkeit gehalten werden kann und die R-Koordinaten des der Oberfläche 32 nachgeführten Tastelements 20 erfasst werden.

Der Ordnung halber sei abschließend darauf hingewiesen, dass zum besseren Verständnis des Aufbaus der Biegemaschine diese bzw. deren Bestandteile teilweise unmaßstäblich und/oder vergrößert und/oder verkleinert dargestellt wurden.

Die den eigenständigen erfinderischen Lösungen zugrunde liegende Aufgabe kann der Beschreibung entnommen werden.

Vor allem können die einzelnen in den Fig. 1; 2, 3; 4; 5 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

| | | | |
|---|---|---|---|
| 1 | Biegemaschine | 42 | Optoelektronischer Sensor |
| 2 | Dicke | 43 | Biegeebene |
| 3 | Werkstück | 44 | Abtastabstand |
| 4 | Abkantpresse | | |
| 5 | Biegegesenk | | |
| | | | |
| 6 | Biegestempel | | |
| 7 | Pressenbalken | | |
| 8 | Pressenbalken | | |
| 9 | Verstellrichtung | | |
| 10 | Maschinenrahmen | | |
| | | | |
| 11 | Stellantrieb | | |
| 12 | Hydraulikzylinder | | |
| 13 | Steuerungsvorrichtung | | |
| 14 | Anschlagvorrichtung | | |
| 15 | Anschlagelement | | |
| | | | |
| 16 | Positionierantrieb | | |
| 17 | Positioniersteuerung | | |
| 18 | Hinteranschlagfinger | | |
| 19 | Führungsanordnung | | |
| 20 | Tastelement | | |
| | | | |
| 21 | Koordinatensystem | | |
| 22 | Anlagefläche | | |
| 23 | Biegeausnehmung | | |
| 24 | V-Nut | | |
| 25 | Biegegesenklänge | | |
| | | | |
| 26 | Messlänge | | |
| 27 | Raumpunkt | | |
| 28 | Bewegungsbahn | | |
| 29 | Erste Konturmessung | | |
| 30 | Reverenzkurve | | |
| | | | |
| 31 | Zweite Konturmessung | | |
| 32 | Oberfläche | | |
| 33 | Raumpunkt | | |
| 34 | Messlänge | | |
| 35 | Werkstücklänge | | |
| | | | |
| 36 | Bewegungsbahn | | |
| 37 | Messkurve | | |
| 38 | Abtastrolle | | |
| 39 | Hinteranschlagfinger | | |
| 40 | Dickenverlauf | | |
| 41 | Dickenmesswert | | |
| | | | |

## Patentansprüche

1. Verfahren zur Bestimmung der Dicke (2) eines in einer Biegemaschine (1) mit einem Biegegesenk (5) und einem Biegestempel (6) zu biegenden flächigen Werkstücks (3) mittels einer zur Positionierung des Werkstücks (3) verwendeten und mit einem Tastelement (20) versehenen, achsgesteuerten und positionsgeregelten Anschlagvorrichtung (14) der Biegemaschine (1), **dadurch gekennzeichnet, dass** mit der Anschlagvorrichtung (14) in einer ersten Konturmessung (29) eine Anlagefläche (22) des Biegegesenks (5) vermessen und als durch zumindest zwei Raumpunkte (27, 27') umfassende Referenzkurve (30) erfasst wird und in einer zweiten Konturmessung (31) eine Oberfläche (32) des an der Anlagefläche (22) anliegenden Werkstücks (3) vermessen und als zumindest zwei Raumpunkte (33, 33') umfassende Messkurve (37) erfasst wird und die Dicke (2) durch Vergleich von Messkurve (37) und Referenzkurve (30) als zumindest ein Dickenmesswert (41) des Werkstücks (3) ermittelt wird, wobei das Tastelement (20) bei den zwei Konturmessungen (29,) parallel zur Biegeebene (43) etwa horizontal entlang der Anlagefläche (22) und der Oberfläche (32) gleitend oder wälzend oder berührungslos geführt wird.

2. Verfahren nach Anspruch 1, **dadurch gekennzeichnet, dass** aus den wenigstens zwei Konturmessungen (29, 31) durch Subtraktion von Messkurve (37) und Referenzkurve (30) ein mehrere Dickenmesswerte (41) enthaltender Dickenverlauf (40) des Werkstücks (3) ermittelt wird, aus dem die Dicke (2) abgeleitet wird.

3. Verfahren nach einem der vorhergehenden Ansprüche, **dadurch gekennzeichnet, dass** die Dicke (2) des Werkstücks (3) zur Ermittlung der zur Erreichung eines Sollwinkels am gebogenen Werkstück erforderlichen Eintauchtiefe des Biegestempels (6) oder der erforderlichen Biegekraft benutzt wird.

4. Verfahren nach einem der vorhergehenden Ansprüche, **dadurch gekennzeichnet, dass** die zwei Konturmessungen (29, 31) im Falle eines an der Anlagefläche (22) und der Oberfläche (32) gleitend oder wälzend entlang geführten Tastelementes (6) mit einer möglichst konstanten Abtastkraft durchgeführt werden und im Falle eines an der Anlagehfläche (22) und der Oberfläche (32) berührungslos entlang geführten Tastelementes (6) mit einem möglichst konstanten Abtastabstand (44) abgefahren werden.

5. Verfahren nach einem der vorhergehenden Ansprüche, **dadurch gekennzeichnet, dass** die Abtastkraft aus der Motorstromaufnahme des Positionierantriebes (16) der Anschlagvorrichtung (14) ermittelt und unter Verwendung der Positioniersteuerung (17) der Anschlagvorrichtung (14) geregelt wird.

6. Verfahren nach einem der vorhergehenden Ansprüche, **dadurch gekennzeichnet, dass** die Abtastkraft mit einer mit dem Tastelement (20) verbundenen Kraftmesseinrichtung an der Anschlagvorrichtung (14) ermittelt wird und unter Verwendung der Positionssteuerung (17) der Anschlagvorrichtung (14) geregelt wird.

7. Verfahren nach Anspruch einem der vorhergehenden Ansprüche, **dadurch gekennzeichnet, dass** die erste und die zweite Konturmessung (29, 31) mit zumindest abschnittsweise identischen Bewegungsabläufen des Tastelements (20) durchgeführt werden.

8. Verfahren nach einem der vorhergehenden Ansprüche, **dadurch gekennzeichnet, dass** das Werkstück (3) für die Durchführung der zweiten Konturmessung (31) mit Hilfe der Anschlagvorrichtung (14) auf dem Biegegesenk (5) positioniert wird.

9. Verfahren nach einem der vorhergehenden Ansprüche, **dadurch gekennzeichnet, dass** die Dicke (2) des Werkstückes (3) durch einen Mittelwert oder einen Maximalwert oder einen Minimalwert aus mehreren bei den wenigstens zwei Konturmessungen (29, 31) ermittelten Dickenmesswerten (41) oder des Dickenverlaufs (40) errechnet wird.

10. Verfahren nach einem der vorhergehenden Ansprüche, **dadurch gekennzeichnet, dass** vor der ersten Konturmessung am Biegegesenk (5) eine Detektion des Biegegesenks (5) und Vermessung der Biegeausnehmung (23) durch Verfahren des Tastelementes (20) in einer zur Biegeebene (43) rechtwinkeligen Richtung durchgeführt wird.

11. Biegemaschine (1), insbesondere Abkantpresse, für das Biegeumformen eines flächigen Werkstücks (3), umfassend einen feststehenden, ein Biegegesenk (5) tragenden Pressenbalken (7), einen relativ dazu mittels eines Stellantriebes (11) verstellbaren, einen Biegestempel (6) tragenden Pressenbalken (8), eine Anschlagvorrichtung (14) mit einem Positionierantrieb (16) und einem achsgesteuert und positionsgeregelt verstellbaren Anschlagelement (15) zur Positionierung des zu biegenden Werkstücks (3) relativ zum Biegegesenk (5), ein am Anschlagelement (15) angeordnetes Tastelement (20), eine Steuerungsvorrichtung (13) für den Stellantrieb (11) des verstellbaren Pressenbalkens (8) sowie eine Positioniersteuerung (17) für den Positionierantrieb (16) der Anschlagvorrichtung (14), **dadurch gekennzeichnet, dass**
das Tastelement (20) mittels des Positionierantriebes (16) gleitend oder wälzend oder berührungslos entlang einer Anlagefläche (22) des Biegegesenks (5) zur Ermittlung einer Referenzkurve (30) und entlang einer Oberfläche (32) eines auf der Anlagefläche (22) anliegenden, zu biegenden Werkstücks (3) zur Ermittlung einer Messkurve (37) parallel zur Biegeebene (43) verstellbar ist, wobei die Positioniersteuerung (17) während der Bewegung des Tastelements (20) mittels diesem erfasste Raumpunkte (27, 27', ...), die die Anlagefläche (22) des Biegegesenks (5) repräsentieren und Raumpunkte (33, 33', ...) die eine Oberfläche (32) des Werkstücks (3) repräsentieren, an die Steuerungsvorrichtung (13) übertragen kann und diese aus den ermittelten Koordinatenwerten zumindest einen die Dicke (2) des Werkstücks (3) repräsentierenden Dickenmesswert (41) berechnet.

12. Biegemaschine (1) nach Anspruch 11, **dadurch gekennzeichnet, dass** die Steuerungsvorrichtung (13) zur Ansteuerung des Stellantriebs (11) die zur Erreichung eines Sollwinkels am gebogenen Werkstück erforderliche Eintauchtiefe des Biegestempels (6) oder erforderliche Biegekraft mit Berücksichtigung der Dicke (2) in Form des Dickenmesswerts (41) des Werkstücks (3) oder des Dickenverlaufs (40) des Werkstücks (3) festlegt.

13. Biegemaschine (1) nach Anspruch 11, **dadurch gekennzeichnet, dass** die Anschlagvorrichtung (14) Mittel zur unmittelbaren oder mittelbaren Erfassung der Abtastkraft des gleitend oder wälzend geführten Tastelementes (20) oder des Abtastabstandes des berührungslos geführten Tastelementes (42) umfasst und mittels einer zwischen Positioniersteuerung (17) und Positionierantrieb (16) wirksamen Regelungsfunktion eine Regelung auf eine zumindest annähernd konstante Abtastkraft oder ein zumindest annähernd konstanter Abtastabstand (44) zwischen Tastelement (20, 42) und der zu vermessenden Anlagefläche (22) des Biegegesenks (5) bzw. der Oberfläche (32) des zu biegenden Werkstücks (3) durchführbar ist.

14. Biegemaschine (1) nach einem der 11 bis 13, **dadurch gekennzeichnet**, das 14. Biegemaschine (1) nach einem der Ansprüche 11 bis 13, **dadurch gekennzeichnet, dass** die Ermittlung der Abtastkraft des Tastelements (20) mittelbar basierend auf der Motorstromaufnahme des Positionierantriebes (16) oder unmittelbar mittels einer mit dem Tastelement (20) verbundenen Kraftmesseinrichtung erfolgt.

15. Biegemaschine (1) nach einem der Ansprüche 11 bis 14, **dadurch gekennzeichnet, dass** das Tastelement (20) durch eine Kugel, eine Halbkugel, eine Rolle, ein Rad, oder einen optischen, optoelektronischen oder schallelektronischen Sensor gebildet ist.

16. Biegemaschine (1) nach einem der Ansprüche 11 bis 14, **dadurch gekennzeichnet, dass** das Tastelement (20) durch eine an der Unterseite eines Hinteranschlagfingers (39) der Anschlagvorrichtung (14) befestigten Wälzkörper, insbesondere eine Rollkugel oder eine Abtastrolle (38), gebildet ist.

17. Biegemaschine (1) nach einem der Ansprüche 11 bis 16, **dadurch gekennzeichnet, dass** das Tastelement (20, 42) in einer Richtung senkrecht zur Biegebene (43) verstellbar ist und dabei eine Werkzeugdetektion durch Antasten des Biegegesenks (5) und Vermessen der Biegeausnehmung (23) möglich ist.

## Claims

1. Method of determining the thickness (2) of a flat workpiece (3) to be bent by a bending die (5) and a bending die (6) in a bending machine (1) by means of an axially controlled and position-regulated stop device (14) of the bending machine (1) used to position the workpiece (3) and provided with a scanner element (20), **characterised in that** a contact surface (22) of the bending die (5) is measured by means of the stop device (14) and detected as a reference curve (30) comprising at least two co-ordinates (27, 27') during a first contour measurement (29), and a surface (32) of the workpiece (3) lying against the contact surface (22) is measured and detected as a measurement curve (37) comprising at least two co-ordinates (33, 33') during a second contour measurement (31), and the thickness (2) is determined as at least one thickness measurement value (41) of the workpiece (3) by comparing the measurement curve (37) and reference curve (30), and the scanner element (20) is guided parallel with the bending plane (43) approximately horizontally along the contact surface (22) and the surface (32) in a sliding or rolling manner or without contact during the two contour measurements (29).

2. Method as claimed in claim 1, **characterised in that**, by subtracting the measurement curve (37) and reference curve (30), the at least two contour measurements (29, 31) are used to determine a thickness curve (40) of the workpiece (3) containing several thickness measurement values (41), from which the thickness (2) is derived.

3. Method as claimed in one of the preceding claims, **characterised in that** the thickness (2) of the workpiece (3) is used to determine the stroke depth of the bending die (6) needed or the bending force needed to obtain a desired angle on the bent workpiece.

4. Method as claimed in one of the preceding claims, **characterised in that** if a scanner element (6) is guided along the contact surface (22) and surface (32) in a sliding or rolling manner, the two contour measurements (29, 31) are run with as constant as possible a scanning force and if a scanner element (6) is guided along the contact surface (22) and surface (32) without contact, they are run with as constant as possible a scanning distance (44).

5. Method as claimed in one of the preceding claims, **characterised in that** the scanning force is determined from the motor current uptake of the positioning drive (16) of the stop device (14) and regulated using the positioning controller (17) of the stop device (14).

6. Method as claimed in one of the preceding claims, **characterised in that** the scanning force is determined by means of a force measuring device on the stop device (14) connected to the scanner element (20) and regulated using the positioning controller (17) of the stop device (14).

7. Method as claimed in one of the preceding claims, **characterised in that** the first and the second contour measurement (29, 31) are run with motion sequences of the scanner element (30) which are identical in at least certain sections.

8. Method as claimed in one of the preceding claims, **characterised in that** the workpiece (3) is positioned on the bending die (5) with the aid of the stop device (14) for running the second contour measurement (31).

9. Method as claimed in one of the preceding claims, **characterised in that** the thickness (2) of the workpiece (3) is calculated by means of a mean value or a maximum value or a minimum value from several thickness measurement values (41) determined during the at least two contour measurements (29, 31) or from the thickness curve (40).

10. Method as claimed in one of the preceding claims, **characterised in that** prior to taking the first contour measurement on the bending die (5),the bending die (5) is detected and a measurement taken of the bending recess (23) by moving the scanner element (20) in a direction at a right angle to the bending plane (43).

11. Bending machine (1), in particular a press brake, for bending a flat workpiece (3), comprising a stationary press beam (7) supporting a bending die (5), a press beam (8) supporting a bending die (6) which is displaceable relative to it by means of an actuator drive (11), a stop device (14) with a positioning driver (16) and a displaceable, axially controlled and position-regulated stop element (15) for positioning the workpiece (3) to be bent relative to the bending die (5), a scanner element (20) disposed on the stop element (15), a control device (13) for the actuator drive (11) of the displaceable press beam (8) and a position controller (17) for the positioning drive (16) of the stop device (14), **characterised in that**
the scanner element (20) is displaceable parallel with the bending plane (43) by means of the positioning drive (16) in a sliding or rolling manner or without contact along a contact surface (22) of the bending die (5) in order to determine a reference curve (30) and along a surface (32) of a workpiece (3) to be bent lying on the contact surface (22) in order to determine a measurement curve (37), and the position controller (17) is able to transmit co-ordinates (27, 27', ...) representing the contact surface (22) of the bending die (5) and co-ordinates (33, 33', ...) representing the surface (32) of the workpiece (3) detected by it during the movement of the scanner element (20) to the control device (13) and the latter calculates from the determined co-ordinate values at least one thickness measurement value (41) representing the thickness (2) of the workpiece (3).

12. Bending machine (1) as claimed in claim 11, **characterised in that** the control device (13) for activating the actuator drive (11) sets the stroke depth of the bending die (6) needed or the bending force needed to obtain a desired angle on the bent workpiece taking account of the thickness (2) in the form of the thickness measurement value (41) of the workpiece (3) or the thickness curve (40) of the workpiece (3).

13. Bending machine (1) as claimed in claim 11, **characterised in that** the stop device (14) comprises means for directly or indirectly detecting the scanning force of the scanner element (20) guided in a sliding or rolling manner or the scanning distance of the scanner element (42) guided without contact, and a regulation can be run by means of a regulating function acting between the position controller (27) and positioning device (16) on an at least approximately constant scanning force or an at least approximately constant scanning distance (44) between scanner elements (20, 42) and the contact surface (22) of the bending die (5) to be measured and the surface (32) of the workpiece (3) to be bent.

14. Bending machine (1) as claimed in one of claims 11 to 13, **characterised in that** the scanning force of the scanner element (20) is determined indirectly on the basis of the motor current uptake of the positioning drive (16) or directly by means of a force measuring device connected to the scanner element (20).

15. Bending machine (1) as claimed in one of claims 11 to 14, **characterised in that** the scanner element (20) is provided in the form of a sphere, half-sphere, a roller, a wheel or an optical, opto-electronic or acoustic electronic sensor.

16. Bending machine (1) as claimed in one of claims 11 to 14, **characterised in that** the scanner element (20) is provided in the form of a rolling element attached to the bottom face of a rear stop finger (39) of the stop device (14), in particular a rolling ball or a scanning roller (38).

17. Bending machine (1) as claimed in one of claims 11 to 16, **characterised in that** the scanner element (20, 42) is displaceable in a direction perpendicular to the bending plane (43), thereby making a tool detection possible by scanning the bending die (5) and measuring the bending recess (23).

## Revendications

1. Procédé pour déterminer l'épaisseur (2) d'une pièce plane à plier (3) dans une plieuse (1) avec une matrice à plier (5) et un poinçon de formage (6) au moyen d'un dispositif de butée (14) de la plieuse (1) utilisé pour le positionnement de la pièce (3) et pourvu d'un élément tâteur (20), commandé par l'axe et réglé en position, **caractérisé en ce qu'**est mesurée au moyen du dispositif de butée (14) lors d'une première mesure de contour (29) une face d'application (22) de la matrice à plier (5) et est détectée comme courbe de référence (30) comprenant au moins deux points spatiaux (27, 27'), et lors d'une deuxième mesure de contour (31), une surface (32) de la pièce (3) s'appliquant à la face d'application (22) est mesurée et est détectée comme courbe de mesure (37) comprenant au moins deux points spatiaux (33, 33'), et l'épaisseur (2) est déterminée par une comparaison de la courbe de mesure (37) et de la courbe de référence (30) comme au moins une valeur de mesure d'épaisseur (41) de la pièce (3), où l'élément tâteur (20), lors des deux mesures de contour (29), est guidé parallèlement au plan de pliage (43) à peu près horizontalement le long de la face d'application (22) et de la surface (32) d'une manière glissante ou roulante ou sans contact.

2. Procédé selon la revendication 1, **caractérisé en ce qu'**est déterminée à partir des au moins deux mesures de contour (29, 31), par la soustraction de la courbe de mesure (37) et de la courbe de référence (30), une courbe d'épaisseur (40) contenant plusieurs valeurs de mesure d'épaisseur (41) de la pièce (3), à partir de laquelle l'épaisseur (2) est dérivée.

3. Procédé selon l'une des revendications précédentes, **caractérisé en ce que** l'épaisseur (2) de la pièce (3) est utilisée pour déterminer la profondeur de plongée du poinçon de formage (6) requise pour atteindre un angle de consigne à la pièce pliée ou de la force de pliage requise.

4. Procédé selon l'une des revendications précédentes, **caractérisé en ce que** les deux mesures de contour (29, 31), dans le cas d'un élément tâteur (6) guidé d'une manière glissante ou roulante le long de la face d'application (22) et de la surface (32) sont exécutées avec une force de tâtage la plus constante possible et, dans le cas d'un élément tâteur (6) guidé à la face d'application (22) et la surface (33) sans contact sont exécutées à un écart de tâtage (44) le plus constant possible.

5. Procédé selon l'une des revendications précédentes, **caractérisé en ce que** la force de tâtage est déterminée à partir de la réception du courant du moteur de l'entraînement de positionnement (16) du dispositif de butée (4) et est réglée en utilisant la commande de positionnement (17) du dispositif de butée (14).

6. Procédé selon l'une des revendications précédentes, **caractérisé en ce que** la force de tâtage est déterminée au moyen d'une installation de mesure de force reliée à l'élément de tâtage (20) au dispositif de butée (14) et est réglée en utilisant la commande de positionnement (17) du dispositif de butée (14).

7. Procédé selon l'une des revendications précédentes, **caractérisé en ce que** la première et la deuxième mesure de contour (29, 31) sont exécutées avec des déroulements de mouvement de l'élément de tâtage (20) au moins identiques par section.

8. Procédé selon l'une des revendications précédentes, **caractérisé en ce que** la pièce (3) pour l'exécution de la deuxième mesure de contour (31) est postionnée à l'aide du dispositif de butée (14) sur la matrice à plier (5).

9. Procédé selon l'une des revendications précédentes, **caractérisé en ce que** l'épaisseur (2) de la pièce (3) est calculée par une valeur moyenne ou une valeur maximale ou une valeur minimale à partir de plusieurs valeurs de mesure d'épaisseur (41) ou de la courbe d'épaisseur (40) déterminées lors des au moins deux mesures de contour (29, 31).

10. Procédé selon l'une des revendications précédentes, **caractérisé en ce que**, avant la première mesure du contour, il est exécuté à la matrice à plier (5) une détection de la matrice à plier (5) et pour la mesure de l'évidement de pliage (23) par un déplacement de l'élément tâteur (20) dans une direction perpendiculaire au plan de pliage (43).

11. Plieuse (1), en particulier presse plieuse, pour la déformation par pliage d'une pièce plane (3), comprenant un sommier de pression (7) supportant une matrice à plier (5), un sommier de pression (8) ajustable relativement à celui-ci par une commande de positionnement (11), supportant un poinçon de formage (6), un dispositif de butée (14) avec un entraînement de positionnement (16) et un élément de butée ajustable (15) commandé par axe et réglé en position pour le positionnement de la pièce à plier (3) relativement à la matrice à plier (5), un élément tâteur (20) disposé à l'élément de butée (15), un dispositif de commande (13) pour l'entraînement de positionnement (11) du sommier de pression ajustable (8) ainsi qu'une commande de positionnement (17) pour l'entraînement de positionnement (16) du dispositif de butée (14), **caractérisée en ce que**
1. l'élément tâteur (20) est ajustable au moyen d'un entraînement de positionnement (16) d'une manière glissante ou roulante ou sans contact le long d'une face d'application (22) de la matrice à plier (5) pour déterminer une courbe de référence (30) et le long d'une surface (32) d'une pièce à plier (3) s'appliquant à la face d'application (22) pour la détermination d'une courbe de mesure (37) parallèlement au plan de pliage (43), où la commande de positionnement (17), pendant le déplacement de l'élément tâteur (20), peut transférer au dispositif de commande (13) des points spatiaux (27, 27',...), détectés par celui-ci, qui représentent la face d'application (22) de la matrice à plier (5), et des points spatiaux (33, 33',...) qui représentent une surface (32) de la pièce (3), et celui-ci calcule à partir des valeurs de coordonnées déterminées au moins une valeur de mesure d'épaisseur (41) représentant l'épaisseur (2) de la pièce (3).

12. Plieuse (1) selon la revendication 11, **caractérisée en ce que** le dispositif de commande (13), pour la commande de l'entraînement de positionnement (11), détermine la profondeur de plongée du poinçon de formage (6) requise pour l'atteinte d'un angle de consigne à la pièce pliée ou bien la force de pliage requise en prenant en considération l'épaisseur (2) sous la forme de la valeur de mesure d'épaisseur (41) de la pièce (3) ou de la courbe d'épaisseur (40) de la pièce (3).

13. Plieuse (1) selon la revendication 11, **caractérisée en ce que** le dispositif de butée (14) comprend des moyens pour la détection indirecte ou directe de la force de tâtage de l'élément tâteur (20) guidé d'une manière glissante ou roulante ou bien de l'écart de tâtage de l'élément tâteur (42) guidé sans contact, et au moyen d'une fonction de réglage effective entre la commande de positionnement (17) et l'entraînement de positionnement (16), un réglage à une force de tâtage au moins approximativement constante ou bien un écart de tâtage (44) au moins approximativement constant entre l'élément de tâtage (20, 42) et la face d'application à mesurer (22) de la matrice à plier (5) respectivement de la surface (32) de la pièce à plier (3) peut être exécuté.

14. Plieuse (1) selon l'une des revendications 11 à 13, **caractérisée en ce que** la détermination de la force de tâtage de l'élément tâteur (20) a lieu en étant directement basée sur la réception du courant moteur de l'entraînement de positionnement (16) ou indirectement au moyen d'une installation de mesure de force reliée à l'élément tâteur (20).

15. Plieuse (1) selon l'une des revendications 11 à 14, **caractérisée en ce que** l'élément tâteur (20) est formé par une bille, une hémisphère, un rouleau, une roue ou un capteur optique, opto-électronique ou acoustique-électronique.

16. Plieuse (1) selon l'une des revendications 11 à 14, **caractérisée en ce que** l'élément tâteur (20) est formé par un corps de roulement, en particulier une bille de roulement ou un rouleau tâteur (38) fixé à un côté inférieur d'un doigt de butée arrière (39) du dispositif de butée (14).

17. Plieuse (1) selon l'une des revendications 11 à 16, **caractérisée en ce que** l'élément tâteur (20, 42) est ajustable dans une direction perpendiculaire au plan de pliage (43) et, ce faisant, une détection d'outil est possible par le tâtage de la matrice à plier (5) et la mesure de l'évidement de pliage (23).
